# EUROPEAN PATENT APPLICATION

(11) **EP 3 370 426 A1**
(43) Date of publication of application: **05.09.2018**
(21) Application number: 17179178.3
(22) Date of filing: 30.06.2017
(51) Int. Cl.: H04N 21/234, H04N 21/236, H04N 21/258, H04N 21/414, H04N 21/44, H04N 21/45, H04N 21/472, H04N 21/4788, H04N 21/482

(54) **METHOD AND SYSTEM FOR PROVIDING SPATIAL DISTRIBUTION OF CONTENT TO A USER IN REAL TIME**

(30) Priority: 04.03.2017 IN 201741007681
(71) Applicant: Wipro Limited, 560 035 Karnataka (IN)
(72) Inventor: SELVARAJ, Ashok Kumar, 560100 Karnataka (IN)
(74) Representative: Finnegan Europe LLP

(57) **Abstract**

The present disclosure relates to a method and system for providing spatial distribution of content to a user in real time. The method includes retrieving, by a content view distribution server, device information and a content view subscription information of at least one client device of the user in response to published device information and the content view subscription information by the user. The method also includes fetching at least one content view of the content from one of a content provider. The method further includes generating one or more recommendations of the spatial distribution of the content for selection of a spatial configuration by the user. The one or more recommendations are based on the content view subscription information. Moreover, the method includes providing the at least one content view of the content to the at least one client device based on the spatial configuration selected by the user.

## Description

### FIELD OF THE DISCLOSURE

The present subject matter generally relates to the field of content distribution. More particularly, the present disclosure discloses a method and system for providing spatial distribution of content to a user in real time.

### BACKGROUND

With advances in digital multimedia technology, users are easily able to view high quality digital visual media. Content providers are able to generate and provide different views of a content. For an example, a content provider captures a live broadcast of a cricket match with different viewing angles. The viewing angles can include a left view of the cricket match, a right view of the cricket match, a center view of the cricket match, an audience view, a commentator's view, and the like.

However, a user typically views such different views of the content on a television as displayed by the content provider. The user is unable to control display of the different views of the content and may hence be dissatisfied with content viewing experience of the content.

### SUMMARY

Embodiments of present disclosure disclose a method providing spatial distribution of content to a user in real time. The method includes retrieving, by a content view distribution server, device information and a content view subscription information of at least one client device of the user in response to published device information and the content view subscription information by the user. The method also includes fetching, by the content view distribution server, at least one content view of the content from one of a content provider. The method further includes generating, by the content view distribution server, one or more recommendations of the spatial distribution of the content for selection of a spatial configuration by the user, the one or more recommendations being based on the content view subscription information. Moreover, the method includes providing, by the content view distribution server, the at least one content view of the content to the at least one client device based on the spatial configuration selected by the user.

Disclosed herein is a content view distribution server for providing spatial distribution of content to a user in real time. The content view distribution server includes a processor and a memory. The memory is communicatively coupled to the processor. The memory stores processor-executable instructions, which, on execution, causes the processor to retrieve device information and a content view subscription information of at least one client device of the user in response to published device information and the content view content view subscription information by the user. The processor is also configured to fetch at least one content view of the content from one of a content provider. The processor is further configured to generate one or more recommendations of the spatial distribution of the content for selection of a spatial configuration by the user, the one or more recommendations being based on the device information and the content view subscription information. Moreover, the processor is configured to provide the at least one content view of the content to the at least one client device based on the spatial configuration selected by the user.

Further, the present disclosure comprises a non-transitory computer readable medium storing instructions for providing spatial distribution of content to a user in real time, wherein upon execution of the instructions by one or more processors, the processors perform operations comprising retrieving device information and a content view subscription information of at least one client device of the user in response to published device information and the content view subscription information by the user. The instructions cause the processor to fetch at least one content view of the content from one of a content provider. Further, the instructions cause the processor to generate one or more recommendations of the spatial distribution of the content for selection of a spatial configuration by the user, the one or more recommendations being based on the content view subscription information. Furthermore, the instructions cause the processor to provide the at least one content view of the content to the at least one client device based on the spatial configuration selected by the user.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates an environment, in accordance with some embodiments of the present disclosure;
FIG. 2 illustrates a content view distribution server, in accordance with some embodiments of the present disclosure;
FIG. 3 is a flowchart illustrating a method of providing spatial distribution of content to a user in real time, in accordance with some embodiments of the present disclosure;
FIG. 4 illustrates a method flow diagram for generating recommendations of a spatial distribution of content by a content view distribution server, in accordance with some embodiments of the present disclosure;
FIG. 5 illustrates a method flow diagram for providing at least one content view of content to at least one client device based on a spatial configuration selected by a user, in accordance with some embodiments of the present disclosure;
FIG. 6 illustrates a method flow diagram for updating at least one content view in real time, in accordance with some embodiments of the present disclosure; and
FIG. 7 illustrates a block diagram of an exemplary computer system for implementing various embodiments, in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

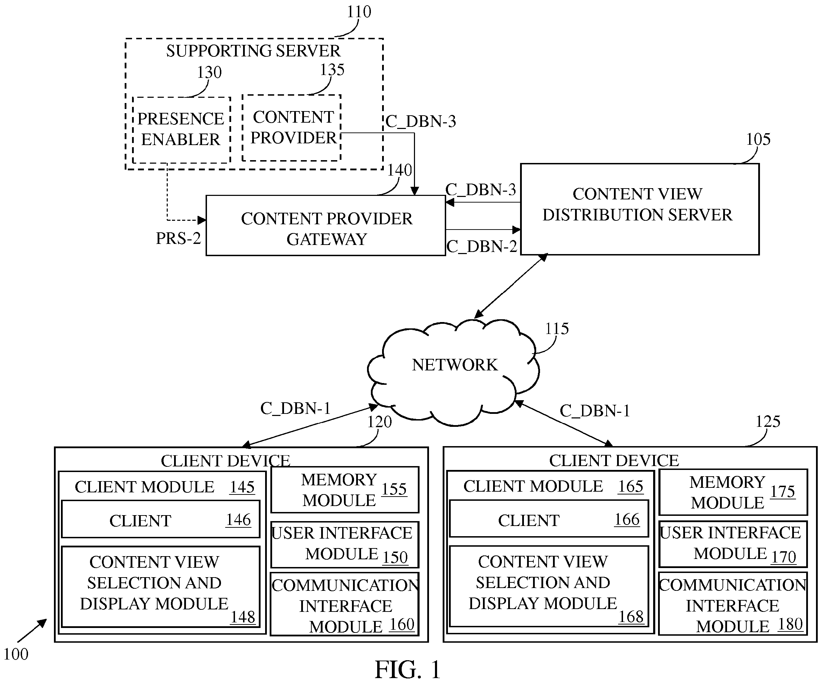

FIG. 1 illustrates an environment 100, in accordance with some embodiments of the present disclosure.

The environment 100 includes a content view distribution server 105, a supporting server 110, a network 115, and a plurality of client devices, for example a client device 120 and a client device 125. The supporting server 110 includes a presence enabler 130 and a content provider 135. A content provider gateway 140 is coupled between the content view distribution server 105 and the supporting server 110. The content view distribution server 105 can communicate with the client device 120 and the client device 125 through the network 115. Examples of the network 115 include, but are not limited to, a local area network (LAN), a wide area network (WAN), a wireless network, Internet, and the like.

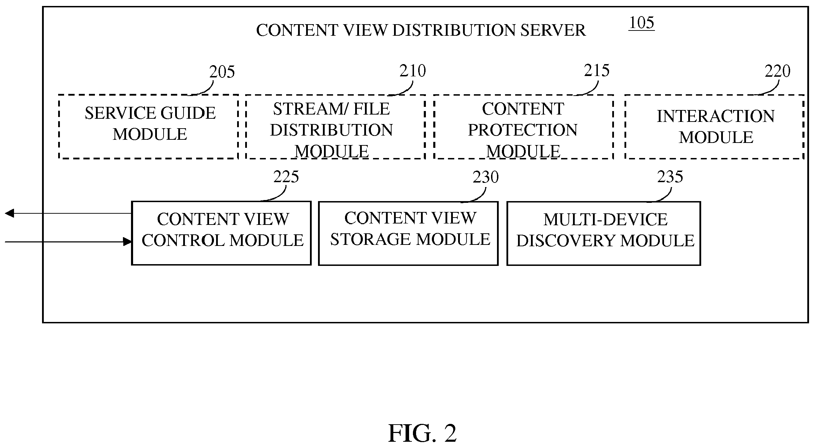

The content view distribution server 105 is configured to receive content view interest requests from the client devices. The content view distribution server 105 is further configured to fetch content from the supporting server 110 and provide multiple views of the content to the client devices. The content view distribution server 105 and its components are explained in detail with reference to FIG. 2.

The content provider gateway 140 receives a content view interest request from the content view distribution server 105. The content provider gateway 140 is defined as a gateway for each content provider. The content provider gateway 140 interacts with a respective content provider, for example the content provider 135, based on the content view interest request, fetches at least one content view of the content from the content provider, and delivers the at least one content view of the content to the content view distribution server 105 in response.

The presence enabler 130 in the supporting server 110 allows the user to obtain presence information of other users. In an example, the functionalities provided by the presence enabler 130 are specified in a specification, for example an OMA-PRS-AD specification, published in an Open Mobile Alliance (OMA) forum. The OMA-PRS-AD specification represents architecture specification of the presence enabler 130 published in the Open Mobile Alliance (OMA). The functionalities of the presence enabler 130 is used to obtain the at least one content view of the content through PRS-1 and PRS-2 interfaces defined by the presence enabler 130. The presence enabler 130 can further include a presence client (for instance, a watcher component) and presence server components for publishing and retrieving the at least one content view of the content and providing the at least one content view of the content to the user.

The content provider 135 in the supporting server 110 delivers the at least one content view of the content based on the content view interest request during an integrated content view distribution session. In some examples, the content is a media content including a live broadcast content. In some embodiments, the content provider 135 delivers different views of the content to multiple client devices of the user at real-time according to spatial configuration of the user through the content provider gateway 140 to enhance content viewing experience.

The client devices, for example the client device 120 and the client device 125, are used for establishing real-time content view distribution in an established integrated content view distribution session. The client device 120 includes a client module 145, a user interface (UI) module 150, a memory module 155 and a communication interface module 160. The client module 145 further includes a client 146 and a content view selection and display module 148. The client device 125 includes a client module 165, a user interface (UI) module 170, a memory module 175 and a communication interface module 180. The client module 165 further includes a client 166 and a content view selection and display module 168. In one example, the client device 120 is a mobile device and the client device 125 is a laptop. It is understood that the environment 100 can include client devices other than the client device 120 and the client device 125 and is not limited to the client device 120 and the client device 125.

The client module 145 of the client 120 is configured to perform functions required for both viewing the content and communicating with the content view distribution server 105. In some examples, the content includes, but is not limited to live broadcasted content from the content provider 135, user generated live content, associated content and preview of content.

The client 146 in the client module 145 is configured to receive the content view interest request from the user. The client 146 can further initiate various session initiation protocol (SIP) INVITE request messages within the content view interest request and control signals towards the content view distribution server 105. The client 146 can also control signals towards the presence enabler 130 for publishing device capability information, device presence information, content view subscription information and establishing the integrated content view distribution session in real-time.

The client 146 receives one or more recommendations of the spatial distribution of the content from the content view distribution server 105. The spatial distribution of the content is defined as different views of the content distributed to the client devices. For instance, a left view of the content is distributed to a left-positioned client device, a right view of the content is distributed to the right positioned device, and the like. In an example, the recommendations can be displayed to the user as a list.

The content view selection and display module 148 is configured to share a spatial configuration selected by the user from the recommendations of the spatial distribution of the content, to the content view distribution server 105. The content view selection and display module 148 is also configured to display at least one content view received by the client module 145 to the at least one client device to provide the user an enhanced content viewing experience.

The spatial configuration includes one of a spatial relationship, a location, and an orientation. The spatial relationship represents one or more views of the content, for example a left view, a right view of the content, and the like. The location represents position of the at least one client device of the user, for instance north, south, east, west, and the like. The orientation represents direction of the at least one client device, for example facing east, facing west, and the like, with respect to the user.

The UI module 150 can provide a user interface for the client 146 to establish an integrated content view distribution session for the user as well as provide indications to the user depicting progress of the integrated content view distribution session.

The memory module 155 stores different content including different views of the content. The memory module 155 also maintains the recommendations of the spatial distribution of the content to be used by the client 146 during the initiation of the integrated content view distribution session. It should be understood that components of the client device 125 function similar to components of the client device 120 and description of the components of the client device 120 is hence similar for the components of the client device 125.

Some interfaces that are used in the environment 100 include C_DBN-1 interface, C_DBN-2 interface and C_DBN-3 interface and are explained herein in detail. The C_DBN-1 interface is coupled between the content view distribution server 105 and the client device 120 and the client device 125. The client device 120 and the client device 125 are thereby allowed to access or trigger functionalities of the content view distribution server 105.

The C_DBN-1 interface establishes the integrated content view distribution session (initiation, modification, termination) between the client device 120 (or the client device 125) and the content view distribution server 105. The C_DBN-1 interface controls content view distribution or the spatial distribution in the integrated content view distribution session to the client devices. The C_DBN-1 interface shares device information and the spatial configuration selected by the user to the content view distribution server 105.

The C_DBN-1 interface is further responsible to deliver the at least one content view to the content view distribution server 105 based on the spatial configuration selected by the user. The C_DBN-1 interface also delivers live media, content views related information, the recommendations of the spatial distribution of the content, the at least one content view to respective client devices in real-time, and control of media transfer pertaining to the at least one content view. The C_DBN-1 interface further updates content views in real-time based on the spatial configuration in the integrated content view distribution session.

The C_DBN-2 interface is coupled between the content view distribution server 105 and the content provider gateway 140. The C_DBN-2 interface allows the content provider 135 to trigger the integrated content view distribution session with the client 120 (or the client 125) through the content view distribution server 105 and the content provider gateway 140. The C_DBN-2 interface forwards session initiation and termination requests to and from the content provider 135.

The C_DBN-3 interface is coupled to the content provider gateway 140 from the content view distribution server 105 and the content provider 135. The C_DBN-3 interface allows the content view distribution server 105 to establish the integrated content view distribution session to retrieve the at least one content view and relevant information from the content provider 135. Examples of the relevant information includes, but are not limited to, content list, content metadata, and list of content views associated with the content. The C_DBN-3 interface forwards real-time media delivery session initiation, modification and termination requests to the content provider 135. The C_DBN-3 interface provides the content and related information from the content provider 135 to the content view distribution server 105 through the integrated content view distribution session.

In some embodiments, the at least one content view delivered to the multiple client devices during the integrated content view distribution session can be changed by the user in real-time and the integrated content view distribution session is maintained between the content view distribution server 105 and the client 120 (or the client 125).

Referring now to FIG. 2, the content view distribution server 105 in the environment 100 is illustrated, in accordance with some embodiments of the present disclosure. The content view distribution server 105 includes a service guide module 205, a stream or file distribution module 210, a content protection module 215, and an interaction module 220. Additionally, the content view distribution server 105 includes a content view control module 225, a content view storage module 230 and a multi-device discovery module 235 to provide multiple content views of the content to the user in real-time based on the spatial configuration of the user.

The service guide module 205 refers to the Open Mobile Alliance (OMA) Mobile Broadcast (BCAST) Services functional component to provide users with various broadcasted content available in associated regions. The service guide module 205 also provides support for rich media solution based Service Guide presentation. The functionalities provided by the service guide module 205 are specified in [OMA-AD-BCAST] specification published in OMA forum.

The stream or file distribution module 210 refers to the OMA Mobile Broadcast (BCAST) Services functional component to distribute a stream, a file or a bundle of files over a broadcast channel. The stream or file distribution module 210 can also transmit the stream to the client device 120 (or the client device 125) over an interaction channel. The stream or file distribution module 210 can also transmit the file or the bundle of files to the client devices over the interaction channel. Functionalities provided by the stream or file distribution module 210 are specified in the [OMA-AD-BCAST] specification published in OMA forum.

The content protection module 215 refers to the OMA Mobile Broadcast (BCAST) Services functional component to provide support for content protection of file, stream and interfaces among BCAST logical entities. The functionalities provided by the content protection module 215 are specified in the [OMA-AD-BCAST] specification published in the OMA forum.

The interaction module 220 refers to the OMA Mobile Broadcast (BCAST) Services functional component to provide a point-to-point communication between a BCAST service application in the network 115 and the client device 120 (or the client device 125). The functionalities provided by the interaction module 220 are specified in the [OMA-AD-BCAST] specification published in the OMA forum.

The content view control module 225 in the content view distribution server 105 generates the one or more recommendations of the spatial distribution of the content that is identified for distribution to the client devices discovered. The content view control module 225 is responsible to generate content view subscription information for sharing to the users. The content view control module 225 provides a centralized mixing of content, for example multiple content views of the content, primary content, and associated content, based on the spatial configuration of the client devices and device capabilities. The content view control module 225 performs handling of the integrated content view distribution session (for example, session initiation, modification and termination related functions) in real-time. The content view control module 225 also performs policy enforcement in the integrated content view distribution session according to service provider policies.

The content view control module 225 provides session description protocol (SDP) negotiation for real-time content viewing. The content view control module 225 maintains integration information of integrated content view distribution sessions. The content view control module 225 supports multiple views of the content in the integrated content view distribution session. The content view control module 225 provides distribution of media streams of the content to the client devices according to the spatial configuration. The content view control module 225 also supports handling of the client devices based on media characteristics and device capabilities. The content view control module 225 shares whole or parts of the content and/or references to the whole or parts of content from stored content.

The content view control module 225 is configured to receive the content interest request from the client device 120 (or the client device 125) including the spatial configuration for establishing the integrated content view distribution session for an enhanced content viewing. In an example, the content interest request includes a Session Initiation Protocol (SIP) INVITE request message and body of the SIP INVITE request message includes the spatial configuration selected by the user and a content view distribution feature tag. The content view distribution feature tag included in a first SIP INVITE request message indicates whether the session that is initiated is for establishing the integrated content view distribution session to view the at least one content view of the content in the at least one client device.

The content view control module 225 is configured to interact with the multi-device discovery module 235 to determine the device capability information. The content view control module 225 is configured to interact with the content view storage module 230 to determine the spatial configuration selected by the user and to access the content viewing information, for example content metadata and viewing progress of the primary content. The content view control module 225 is configured to interact with the content provider gateway 140 in order to fetch the at least one content view of the content and to fetch the content for mixing. The content view control module 225 is configured to interact with the client device 120 (or the client device 125) for providing the one or more recommendations of the spatial distribution of the content to the user, and for providing the at least one content view of the content to the client device 120 in real-time based on the spatial configuration. The content view control module 225 is configured to interact with the client device 120 (or the client device 125) for receiving the content interest request that identifies interest of the user in a content view including the spatial configuration, and for receiving an update content view request in real-time.

The content view storage module 230 in the content view distribution server 105 provides a list of contents available in storage including different content views of the content. The content view storage module 230 maintains the user selected content viewing information generated by the content view control module 225. The content view storage module 230 stores, retrieves, deletes, shares, updates interest of the user in the content view. In an example, the interest of the user in the content view is created and shared under a content-type field in the body of the SIP INVITE request message. The content view storage module 230 provides distribution of the media to the client devices according to the spatial configuration. The content view storage module 230 maintains communication information regarding the client devices. The content view storage module 230 interacts with the multi-device discovery module 235 to publish communication information between multiple client devices when communication is distributed on different client devices. The content view storage module 230 interacts with the content view control module 225 for providing the spatial configuration selected by the user.

The multi-device discovery module 235 acts as a server-side functional component of the presence enabler 130 for managing the device presence information. The multi-device discovery module 235 supports functions related to the device capability information, the device presence information, and task management related functions of the client devices. Some examples of the functions related to the device presence information includes, but are not limited to, device online status, content view selection information and content viewing information. The multi-device discovery module 235 supports the functions related to the device capability information by receiving and managing the device capability information published by the client device 120 (or the client device 125). The multi-device discovery module 235 processes subscription on the device capability information from the client device 120 (or the client device 125). The multi-device discovery module 235 transmits the device capability information and the at least one content view subscribed by the user.

The multi-device discovery module 235 supports the functions related to the device presence information by receiving and managing the device online status published in the device presence information from the client device 120 (or the client device 125). The multi-device discovery module 235 processes subscription on the device presence information from the client device 120 (or the client device 125). The multi-device discovery module 235 transmits the device presence information subscribed by the user. The multi-device discovery module 235 also receives and manages (for example, stores, updates, provides) the device presence information to and from the client device 120 (or the client device 125).

The multi-device discovery module 235 supports the task management related functions of the client devices on receiving the content interest from the user. The multi-device discovery module 235 also distributes a communication task and a content viewing task to the multiple client device according to service policy and the device capability information.

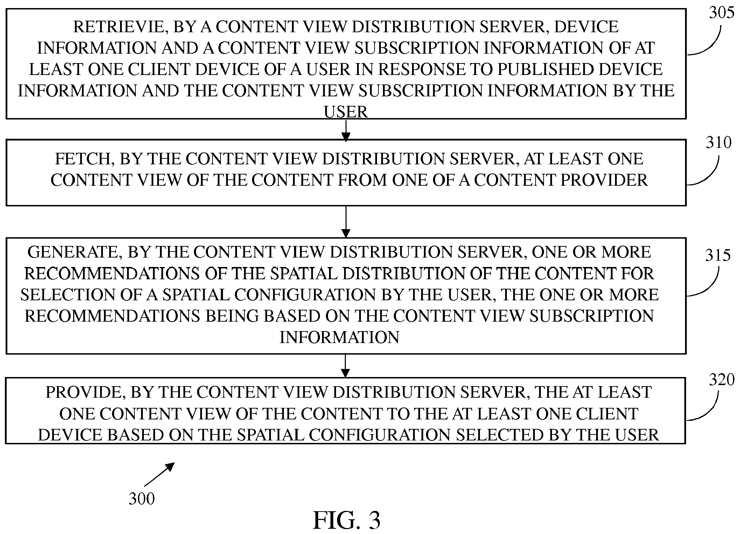

A method flowchart illustrating provision of spatial distribution of content to a user in real time is explained in detail with reference to FIG. 3.

FIG. 3 is a flowchart illustrating a method 300 of providing spatial distribution of content to a user in real time, in accordance with some embodiments of the present disclosure.

The order in which the method is described is not intended to be construed as a limitation, and any number of the described method blocks can be combined in any order to implement the method. Additionally, individual blocks may be deleted from the method without departing from the scope of the subject matter described herein.

At step 305, the method 300 includes retrieving device information and a content view subscription information of at least one client device of the user in response to published device information and the content view subscription information by the user. The device information and the content view subscription information is retrieved by a content view distribution server, for example the content view distribution server 105 of FIG. 1. The working of the content view distribution server is explained in detail with reference to FIG. 1 and FIG. 2 and is not explained herein for sake of brevity. The device information includes a device capability information and a device presence information.

In an embodiment, the device information is published by the at least one client device of the user. In an embodiment, the content view subscription information of the content is subscribed by the at least one client device of the user.

The user publishes the device information and the content view subscription information to the content view distribution server to establish an integrated content view distribution session. The integrated content view distribution session is used to deliver different content views of the content to multiple client devices, for example the client device 120 and the client device 125 of FIG. 1, of the user at real-time. The different content views of the content is delivered to the client devices through a multi-device discovery module, for example the multi-device discovery module 235 of FIG. 1, and a content view control module, for example the content view control module 225 of FIG. 1, using a C_DBN-1 interface defined and exposed by the content view distribution server. The working of the multi-device discovery module, the content view control module is explained in detail with reference to FIG. 1 and FIG. 2 and is not explained herein for sake of brevity.

At step 310, the method 300 includes fetching, by the content view distribution server, at least one content view of the content from one of a content provider, for example the content provider 135 of FIG.1. The at least one content view of the content is fetched by the content view control module from a content provider through a content provider gateway, for example the content provider gateway 140 of FIG. 1. In some embodiments, if the content and the at least one content view are available with a service provider, the content and the at least one content view are fetched from the service provider instead of the content provider.

At step 315, the method 300 includes generating, by the content view distribution server, one or more recommendations of the spatial distribution of the content for selection of a spatial configuration by the user. The one or more recommendations are based on the content view subscription information published by the user.

In an example, the spatial configuration includes one of a spatial relationship, a location, and an orientation. The spatial relationship represents one or more views of the content, the location represents position of the at least one client device of the user, and the orientation represents direction of the at least one client device.

The recommendations of the spatial distribution of the content are generated by the content view control module. For instance, the recommendations in a content list can include a left view distributed to a left-positioned client device, a right view of the content distributed to a right positioned device, and the like. The client device, for example the client device 120 of FIG. 1, is notified of the recommendations by a session initiation protocol (SIP) INVITE request message through the C_DBN-1 interface.

In some embodiments, the recommendations of the spatial distribution of the content includes one or more images of the at least one content view of the content. For example, the service provider can provide the images of each content view associated with the content.

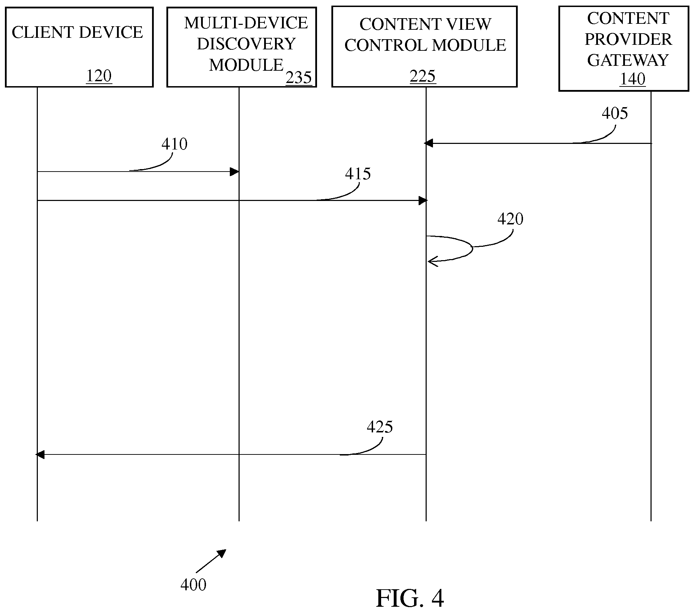

In an example, generation of the recommendations of the spatial distribution of the content by the content view distribution server is explained with help of a flow diagram in FIG. 4.

At step 320, the method 300 includes providing, by the content view distribution server, the at least one content view of the content to the at least one client device based on the spatial configuration selected by the user. The at least one content view of the content is provided on receiving a content view interest request from the user from the at least one client device of the user to establish an integrated content view distribution session on selection of the spatial configuration by the user. In some embodiments, the client device 120 shall include the spatial configuration selected by the user in body (for instance, MIME SDP) of the SIP INVITE request message. The SIP INVITE request message is further placed towards the content view control module through the C_DBN-1 interface. The SIP INVITE request message also includes a content view distribution feature tag that indicates establishment of the integrated content view distribution session to view the at least one content view of the content in the at least one client device.

The integrated content view distribution session (user datagram protocol/ real-time transport protocol (UDP/RTP)) is further established by the content view control module and the content is fetched from the content provider 135 through the content provider gateway 140 using an C_DBN-2 interface and a C_DBN-3 interface. The content is arranged by the content view control module based on the spatial configuration and the content view is provided to respective client devices based on the spatial configuration using the C_DBN-1 interface.

In some embodiments, the content view is provide by mapping the spatial configuration selected by the user with the at least one client device and establishing the integrated content view distribution session with the at least one client device of the user.

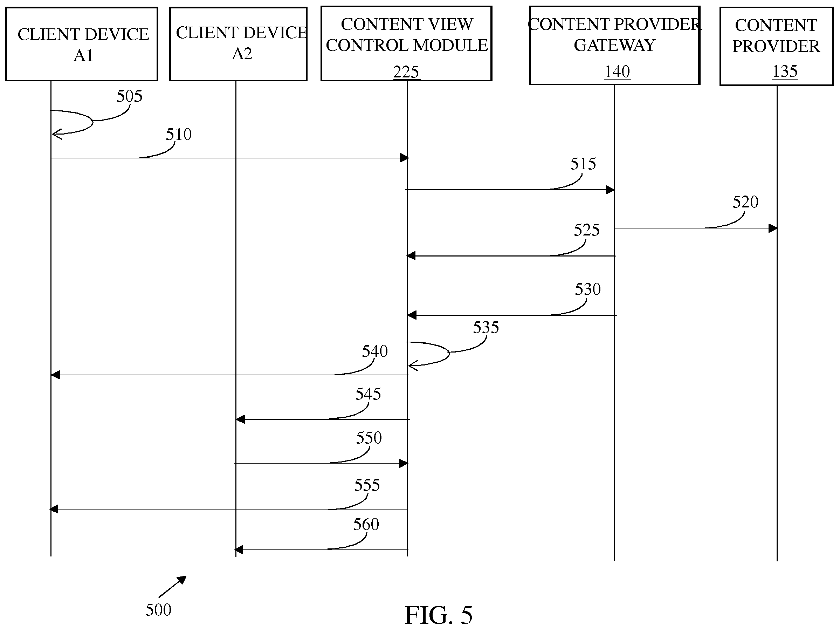

In an example, providing, by the content view distribution server, the at least one content view of the content to the at least one client device based on the spatial configuration selected by the user is explained with help of a flow diagram in FIG. 5.

In some embodiments, the method 300 includes updating, by the content view distribution server, the at least one content view in the real time based on an update content view request received from the user during the integrated content view distribution session. The user is allowed to modify the spatial configuration at real-time in an already established integrated content view distribution session through the C_DBN-1 interface.

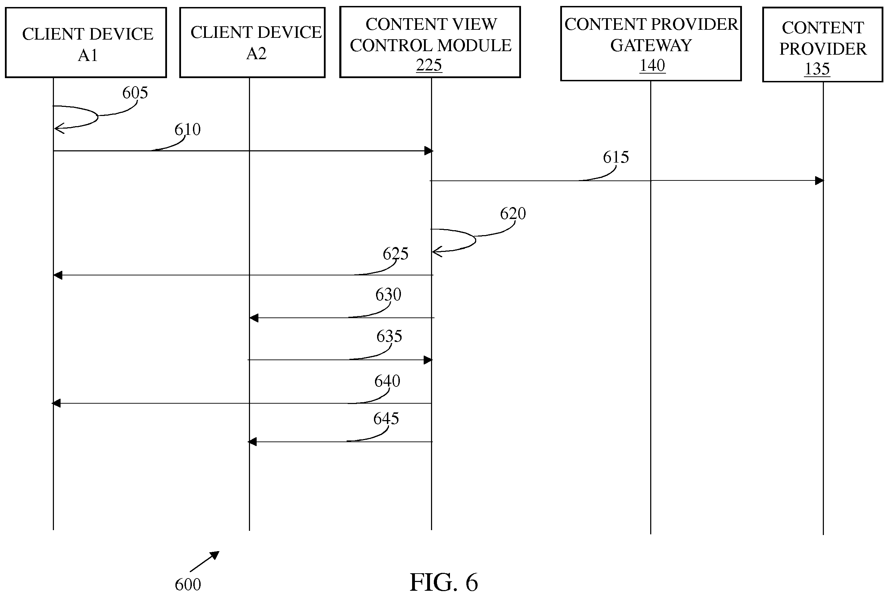

In an example, updating, by the content view distribution server, the at least one content view in the real time is explained with help of a flow diagram in FIG. 6.

Referring now to FIG. 4, a method flow diagram 400 illustrating generation of the recommendations of the spatial distribution of the content by the content view distribution server 105 is illustrated, in accordance with some embodiments of the present disclosure.

At step 405, the content view control module 225 of the content view distribution server 105 has already received the content list including the different content views associated with the content from the content provider gateway 140. It is also assumed that the content view control module 225 has subscribed for receiving updates from the content provider gateway 140 in the content list from the content provider 135 through the C_DBN-3 interface.

At step 410, the client 146 publishes the device information of the at least one client device 120 using an SIP PUBLISH request message. The device information is received by the multi-device discovery module 235.

At step 415, the client 146 publishes the content view subscription information of the at least one client device 120 using an SIP SUBSCRIBE request message to the content view control module 225 of the content view distribution server 105.

Upon receiving a content view interest request from the user to share the spatial distribution of the content in the content list, the client 146 shall subscribe to an "xcap-diff' event package in order to receive continuous updates about the contents list (including different content views). The client 146 generates the SIP SUBSCRIBE request message according to rules and procedures of [RFC6665], an SIP-specific event notification, with additional clarifications described below. In particular, the client 146 performs the following functions:
a. SHALL set a Request-uniform resource identifier (URI) as described in [OMA-XDM-TS] to include the extensible mark-up language user interface (XUI) address of the user, if the SIP SUBSCRIBE request message is targeted towards the XML Document Management Server (XDMS). Otherwise, SHALL set the Request-URI to the address of the content view control module 225;
b. SHALL include an Accept-Contact header field with an IP Multimedia Subsystem (IMS) Communication Service Identifier (ICSI) Value with the content view distribution feature tag 'urn:urn-7:3gpp-service.ims.icsi.cv-cm' percent encoded in a g.3gpp.icsi-ref media feature tag according to [3GPP TS 24.229] section 7.2A.8.2 "Coding of the ICSI";
c. SHALL include the ICSI value with the content view distribution feature tag 'urn:urn-7:3gpp-service.ims.icsi.cv-cm' percent encoded as per [3GPP TS 24.229] section 7.2A.8.2 "Coding of the ICSI" in a g.3gpp.icsi-ref media feature tag of the Accept-Contact header field;
d. SHALL include user address of originating client that has been authenticated by the SIP/IP core as authenticated originator's address;
e. SHALL set the P-Preferred-Service header field with the value of the ICSI value with the content view distribution feature tag 'urn:urn-7:3gpp-service.ims.icsi.cv-cm';
f. SHALL set an Event header field to "xcap-diff";
g. SHALL set an Expires header field to "0" for receiving the content list one time (including different content views of the content), otherwise to a "non-zero" value according to the rules and procedures of [RFC6665];
h. SHALL include the Accept header field with the following values:
   i. "application/xcap-diff+xml" to receive continuous updates of the content list, according to rules and procedures described in [RFC5875];
   ii. SHALL include Content-Type header field to "application/contents-list+xml";
   iii. SHALL use filters as "ContentView" in the MIME SDP body of the SIP SUBSCRIBE request to filter out notifications based on changes done to either the Content List XML document.
i. SHALL send the SIP SUBSCRIBE request message towards the content view control module 225 according to the rules and procedures of the SIP/IP Core.

At step 420, the content view control module 225 of the content view distribution server 105 generates the one or more recommendations of the spatial distribution of the content. Upon receiving the SIP SUBSCRIBE request message with the ICSI content view distribution feature tag 'urn:urn-7:3gpp-service.ims.cv-cm' included in the Accept-Contact header and subscribing to the content list including content views of the content, application usage for notifications on document changes with "xcap-diff" event package, the content view control module 225:
a. SHALL check if the feature tag included in the Accept-Contact header is supported. If it is not, the Server SHALL reject the SIP SUBSCRIBE with a SIP 403 "Forbidden" response and a Warning header field with the warning text set to "122 Function not allowed" in the response according to the rules and procedures of [RFC3261].
   Else, the following steps are performed:
b. SHALL check if the P-Preferred-Service header field is present and carries the value of the ICSI content view distribution feature tag 'urn:urn-7:3gpp-service.ims.icsi.cv-cm' or not.
   i. If the value of ICSI content view distribution feature tag is 'urn:urn-7:3gpp-service.ims.icsi.cv-cm' then the content view distribution server SHALL remove the P-Preferred-Service header field and add P-Asserted-Service header field set to 'urn:urn-7:3gpp-service.ims.icsi.cv-cm';
   ii. Otherwise it MAY respond with a 403 'Forbidden' SIP response
c. SHALL check if the body of the SIP SUBSCRIBE request is present and carries "ContentView" information in its body.
d. SHALL acknowledge with a SIP 200 "OK" response towards SIP/IP Core;
   iii. SHALL set the Accept header field with the value "application/xcap-diff+xml",
   iv. subscribe to the "xcap-diff" event package;
e. SHALL apply the filter "ContentView" information in the received content list from the content provider 135 through the content provider gateway 140 to generate spatial distribution of the content in the content list.

At step 425, the content view control module 225 of the content view distribution server 105 generates an SIP NOTIFY request message according to rules and procedures of the SIP/IP core with the following clarifications:
a. SHALL include the generated spatial distribution of the content in the content list document in the body of the SIP NOTIFY request message.
b. If there is a subscription for an "xcap-diff" event package, then SIP NOTIFY request message SHALL include updated (parts of) the content list.
c. SHALL send the SIP NOTIFY request message towards the client 146 including the content list with multiple content views towards the SIP/IP Core.

Referring now to FIG. 5, a method flow diagram 500 illustrating provision, by the content view distribution server 105, of the at least one content view of the content to the at least one client device based on the spatial configuration selected by the user is illustrated, in accordance with some embodiments of the present disclosure.

At step 505, a user A of a client device A1 (a left positioned device) selects one spatial configuration, for example a left content view distributed to the left positioned device.

At step 510, the client A1 transmits an SIP INVITE request message to the content view control module 225 of the content view distribution server 105.

To receive the at least one content view and continuous content views based on the spatial configuration selected by the user, the client device A1 SHALL generate the SIP INVITE request message according to the rules and procedures of [RFC3261]. In this SIP INVITE request message, the client device A1:
a) SHALL set the Request-URI to the Content Identifier (URI) selected by user;
b) SHALL include an Accept-Contact header field with ICSI value as content view distribution feature tag 'urn:urn-7:3gpp-service.ims.icsi.cv-cm' and with the IMS Application Reference Identifier (IARI) value as content view distribution feature tag 'urn:urn-7:3gpp-service.ims.iari.ecv-session' to indicate the integrated content view distribution session, percent encoded as per [3GPP TS 24.229] section 7.2A.8.2 *"Coding of the ICSI"* in a g.3gpp.icsi-ref media feature tag and section 7.2A.9.2 "Coding of the IARI";
c) SHALL set the P-Preferred-Service header field with the value of the ICSI content view distribution feature tag 'urn:urn-7:3gpp-service.ims.icsi.cv-cm';
d) SHALL include a Contact header field with the ICSI content view distribution feature tag 'urn:urn-7:3gpp-service.ims.icsi.cv-cm', percent encoded as per [3GPP TS 24.229] section 7.2A.8.2 *"Coding of the ICSI"* in a g.3gpp.icsi-ref media feature tag;
e) SHALL include the option tag 'timer' in a Supported header field;
f) SHOULD include the Session-Expires header with the refresher parameter set to "uas" according to the rules and procedures of [RFC4028];
g) SHALL include the user address of the user as the authenticated originator's address;
h) SHALL include a MIME resource-list body with the target addresses of the client devices as specified in [RFC5366], to set the spatial configuration selected by the user. Each entry in the URI-list identifies a spatial-based mapping between content views and the client device A1 and SHALL include one or more of the attributes spatial relationship, location and orientation.
i) SHALL include a MIME SDP body as a SDP offer in the SIP INVITE request according to the rules and procedures of [RFC4566] and [RFC3264];
j) SHALL send the SIP INVITE request according to the rules and procedures of the SIP/IP core.

At step 515, the content view control module 225 transmits the SIP INVITE request message to the content provider gateway 140.

Upon receiving the SIP INVITE request message with ICSI content view distribution feature tag 'urn:urn-7:3gpp-service.ims.icsi.cv-cm' and with the IARI content view distribution feature tag 'urn:urn-7:3gpp-service.ims.iari.ecv-session' included in the Accept-Contact header field corresponding to enhanced content viewing session, the content view control module 225:
a) SHALL check the user address to find the authenticated address of the originating user;
b) SHALL check if the feature tag included in the Accept-Contact header is supported. If it is not, the content view control module 225 SHALL reject the SIP INVITE request message with a SIP 403 "Forbidden" response and a Warning header field with the warning text set to "122 Function not allowed" in the response according to the rules and procedures of [RFC3261]. Else, the following steps are performed:
c) SHALL check the MIME resource-list body to fetch the spatial configuration selected by the user with the following additional clarifications:
   i) The content view control module 225 SHALL check if the MIME resource-list body includes an empty URI list. If the URI list is empty, the content view control module 225 SHALL return a SIP 403 "Forbidden" response and SHALL include a Warning header with the warning text set to "129 No destinations" in the response according to the rules and procedures of [RFC3261].
      Else, the following steps are performed;
   ii) The content view control module 225 SHALL extract all the target addresses of the client devices and corresponding spatial-based mappings between content views and the client device in the entries of MIME resource-lists body:
      (1) Mapping of spatial relationship, if the entry contains the "spatial relationship" attribute;
      (2) Mapping of location, if the entry contains the "location" attribute; and
      (3) Mapping of orientation, if the entry contains the "orientation" parameter;

At step 520, upon receiving the SIP INVITE request message, an integrated content view distribution session is established by the content provider gateway 140 between the content provider 135 and the content view control module 225 of the content view distribution server 105. The integrated content view distribution session is established to fetch the content requested by the client A1 including the spatial distribution of the content.

At step 525, the content provider gateway 140 transmits a SIP 200 OK response message to the content view control module 225 of the content view distribution server 105 upon successfully establishing the integrated content view distribution session.

At step 530, the content view control module 225 sets up a UDP/RTP channel towards the content provider gateway 140 and the content view distribution server 105. The content provider gateway 140 transmits media related to the content requested in SIP INVITE request message over the UDP/RTP channel to the content view control module 225 in the established integrated content view distribution session.

At step 535, the content is arranged based on the spatial configuration by the content view distribution server 105.

The recommendations of the spatial distribution for the content views and the continuous content views are generated according to the spatial configuration selected by the user with the following additional clarifications:
a) The content view control module 225 SHALL check the spatial properties of the content views and the continuous content views and generate the spatial distribution among the client devices for all available content views based on spatial consistency with the spatial configuration.

At step 540, the content view control module 225 of the content view distribution server 105 transmits an SIP 200 OK response message to the client A1.
a) SHALL include in the SIP 200 OK response message a SDP body as a SDP answer according to the rules and procedures of [RFC4566] and [RFC3264];
b) SHALL send the SIP 200 OK response message along the incoming signaling path according to rules and procedures of the SIP/IP core.

At step 545, the content view control module 225 of the content view distribution server 105 transmits a SIP INVITE request message to the client A2 (a right positioned device).

At step 550, the client A2 transmits a 200 OK message to the content view control module 225 of the content view distribution server 105.

At step 555, the content view control module 225 of the content view distribution server 105 transmits a UDP/RTP for the left content view to the client A1.

At step 560, the content view control module 225 of the content view distribution server 105 transmits a UDP/RTP for the right content view to the client A2. Once the integrated content view distribution session is set up, the content view distribution server 105 SHALL distribute the content views and the continuous content views to the corresponding client devices according to the generated spatial distribution.

Referring now to FIG. 6, a method flow diagram 600 illustrating updating, by the content view distribution server 105, the at least one content view in the real time is illustrated, in accordance with some embodiments of the present disclosure.

At step 605, a user A of a client device A1 (a left positioned device) selects another spatial configuration, for example a left content view distributed to the right positioned device in the established integrated content view distribution session.

At step 610, the client A1 generates and transmits an SIP re-INVITE request message to the content view control module 225 of the content view distribution server 105. The SIP re-INVITE request message is generated to receive content views and continuous content views based on the user modified spatial configuration (similar to that described with reference to FIG. 5).

Additionally, the client device A1 performs the following steps:
a) The client device A1 SHALL set each of To header field, From header field and Call-ID header field to the same value as used at the session establishment;
b) SHALL include a modified MIME resource-list body with the target addresses of the client devices as specified in [RFC5366], to set the user selected spatial configuration. Each entry in the URI-list identifies a spatial-based mapping between the content views and the client device and SHALL contain one or more of the attributes spatial relationship, location, and orientation as the spatial configuration;
c) The client device A1 SHALL include a modified MIME SDP body as a new SDP offer in the SIP re-INVITE request according to the rules and procedures of [RFC4566] and [RFC3264];

Upon receiving the SIP re-INVITE request message with ICSI content view distribution feature tag 'urn:urn-7:3gpp-service.ims.icsi.cv-cm' and with the IARI content view distribution feature tag 'urn:urn-7:3gpp-service.ims.iari.ecv-session' included in the Accept-Contact header field corresponding to enhanced content viewing session, the content view control module 225:
a) SHALL check the user address to find the authenticated address of the originating user;
b) SHALL check if the feature tag included in the Accept-Contact header is supported. If it is not, the the content view control module 225 SHALL reject the SIP re-INVITE request message with a SIP 403 "Forbidden" response and a Warning header field with the warning text set to "122 Function not allowed" in the response according to the rules and procedures of [RFC3261].
   Else, the following steps are performed:
c) SHALL check the MIME resource-list body to fetch the spatial configuration selected by the user with the following additional clarifications:
   i) The content view control module 225 SHALL check if the MIME resource-list body includes an empty URI list. If the URI list is empty, the content view control module 225 SHALL return a SIP 403 "Forbidden" response and SHALL include a Warning header with the warning text set to "129 No destinations" in the response according to the rules and procedures of [RFC3261].
      Else, the following steps are performed;
   ii) The content view control module 225 SHALL extract all the target addresses of the client devices and corresponding spatial-based mappings between content views and the client device in the entries of MIME resource-lists body:
      (1) Mapping of spatial relationship, if the entry contains the "spatial relationship" attribute;
      (2) Mapping of location, if the entry contains the "location" attribute; and
      (3) Mapping of orientation, if the entry contains the "orientation" parameter;

At step 615, upon receiving the SIP re-INVITE request message, an integrated content view distribution session is established by the content provider gateway 140 between the content provider 135 and the content view control module 225 of the content view distribution server 105. The integrated content view distribution session is established to fetch the content requested by the client A1 including the spatial distribution of the content.

The content provider gateway 140 transmits a SIP 200 OK response message to the content view control module 225 of the content view distribution server 105 upon successfully establishing the integrated content view distribution session.

The content view control module 225 sets up a UDP/RTP channel towards the content provider gateway 140 and the content view distribution server 105. The content provider gateway 140 transmits media related to the content requested in SIP INVITE request message over the UDP/RTP channel to the content view control module 225 in the established integrated content view distribution session.

At step 620, the content is arranged based on the spatial configuration by the content view distribution server 105.

The recommendations of the spatial distribution for the content views and the continuous content views are generated according to the spatial configuration selected by the user with the following additional clarifications:
a) The content view control module 225 SHALL check the spatial properties of the content views and the continuous content views and generate the spatial distribution among the client devices for all available content views based on spatial consistency with the spatial configuration.

At step 625, the content view control module 225 of the content view distribution server 105 transmits an SIP 200 OK response message to the client A1.
a) SHALL include in the SIP 200 OK response message a SDP body as a SDP answer according to the rules and procedures of [RFC4566] and [RFC3264];
b) SHALL send the SIP 200 OK response message along the incoming signaling path according to rules and procedures of the SIP/IP core.

At step 630, the content view control module 225 of the content view distribution server 105 transmits a SIP re-INVITE request message to the client A2 (a right positioned device).

At step 635, the client A2 transmits a 200 OK message to the content view control module 225 of the content view distribution server 105.

At step 640, the content view control module 225 of the content view distribution server 105 transmits a UDP/RTP for the right content view to the client A1.

At step 645, the content view control module 225 of the content view distribution server 105 transmits a UDP/RTP for the left content view to the client A2. Once the integrated content view distribution session is modified, the content view distribution server 105 SHALL redistribute the content views and the continuous content views to the corresponding client devices according to the modified spatial distribution.

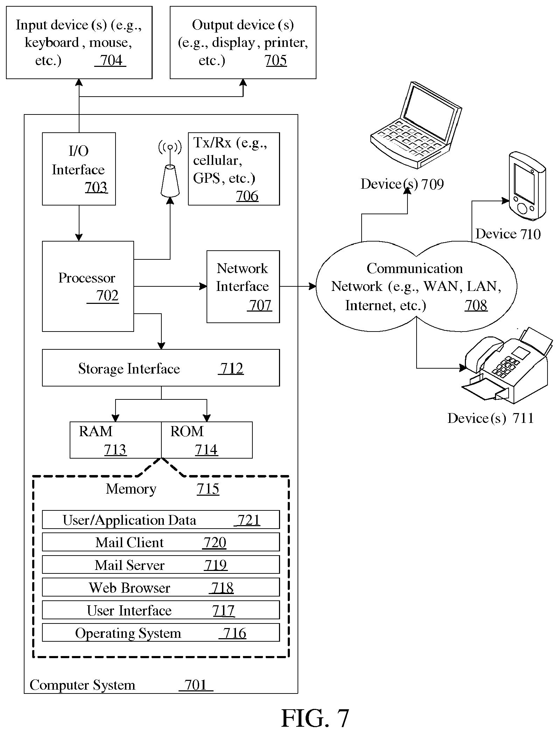

FIG. 7 illustrates a block diagram of an exemplary computer system for implementing embodiments consistent with the present disclosure. Variations of computer system 701 may be used for performing optical character recognition on an image including a plurality of printed characters. The computer system 701 may comprise a central processing unit ("CPU" or "processor") 702. Processor 702 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 702 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 702 may be disposed in communication with one or more input/output (I/O) devices via I/O interface 703. The I/O interface 703 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 703, the computer system 701 may communicate with one or more I/O devices. For example, the input device 704 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 705 may be a printer, fax machine, video display (e.g., cathode ray tube (CRT), liquid crystal display (LCD), light-emitting diode (LED), plasma, or the like), audio speaker, etc. In some embodiments, a transceiver 706 may be disposed in connection with the processor 702. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 702 may be disposed in communication with a communication network 708 via a network interface 707. The network interface 707 may communicate with the communication network 708. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 708 may include, without limitation, a direct interconnection, local area network (LAN), wide area network (WAN), wireless network (e.g., using Wireless Application Protocol), the Internet, etc. Using the network interface 707 and the communication network 708, the computer system 701 may communicate with devices 710, 711, and 712. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 701 may itself embody one or more of these devices.

In some embodiments, the processor 702 may be disposed in communication with one or more memory devices (e.g., RAM 713, ROM 714, etc.) via a storage interface 712. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 716, user interface application 717, web browser 718, mail server 719, mail client 720, user/application data 721 (e.g., any data variables or data records discussed in this disclosure), etc. The operating system 716 may facilitate resource management and operation of the computer system 701. Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 717 may facilitate display, execution, interaction, manipulation, or operation of program components through textual or graphical facilities. For example, user interfaces may provide computer interaction interface elements on a display system operatively connected to the computer system 701, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 701 may implement a web browser 718 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 701 may implement a mail server 719 stored program component. The mail server 719 may be an Internet mail server such as Microsoft Exchange, or the like. The mail server 719 may utilize facilities such as ASP, ActiveX, ANSI C++/C#, Microsoft .NET, CGI scripts, Java, JavaScript, PERL, PHP, Python, WebObjects, etc. The mail server 719 may utilize communication protocols such as internet message access protocol (IMAP), messaging application programming interface (MAPI), Microsoft Exchange, post office protocol (POP), simple mail transfer protocol (SMTP), or the like. In some embodiments, the computer system 701 may implement a mail client 720 stored program component. The mail client may be a mail viewing application, such as Apple Mail, Microsoft Entourage, Microsoft Outlook, Mozilla Thunderbird, etc.

In some embodiments, computer system 701 may store user/application data 721, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Embodiments of the present disclosure provide a method and system for providing spatial distribution of content to a user in real time. The present disclosure provides a user, an enhanced content viewing experience by watching different content views of the content in multiple client devices at real-time according to a spatial configuration of the user. The present disclosure also allows a service provider to fetch multiple content views of the content and generate recommendations of spatial distribution of the content to the user. The present disclosure allows the user to select the spatial configuration while receiving the content from the service provider. The present disclosure allows the service provider to map the spatial configuration selected by the user with the content views of the content and distribute the content views to respective client devices in an established session. The present disclosure also allows the user to update the content views in real-time based on the spatial configuration in the established session and the service provider re-distributes the content views to the respective devices according to a modified spatial configuration. The user hence has control over the display of the different content views through multiple client devices.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications.

Those skilled in the art will appreciate that any of the aforementioned steps and/or system modules may be suitably replaced, reordered, or removed, and additional steps and/or system modules may be inserted, depending on the needs of a particular application. In addition, the systems of the aforementioned embodiments may be implemented using a wide variety of suitable processes and system modules, and are not limited to any particular computer hardware, software, middleware, firmware, microcode, and the like. The claims can encompass embodiments for hardware and software, or a combination thereof.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of providing spatial distribution of content to a user in real time, the method comprising:
retrieving, by a content view distribution server, device information and a content view subscription information of at least one client device of the user in response to published device information and the content view subscription information by the user;
fetching, by the content view distribution server, at least one content view of the content from a content provider;
generating, by the content view distribution server, one or more recommendations of the spatial distribution of the content for selection of a spatial configuration by the user, the one or more recommendations being based on the content view subscription information; and
providing, by the content view distribution server, the at least one content view of the content to the at least one client device based on the spatial configuration selected by the user.

2. The method as claimed in claim 1, wherein the device information is published by the at least one client device of the user.

3. The method as claimed in claim 1 or claim 2, wherein the device information comprises a device capability information and a device presence information.

4. The method claimed in any of the preceding claims, wherein the content view subscription information of the content is subscribed by the at least one client device of the user.

5. The method as claimed in any of the preceding claims, wherein the one or more recommendations of the spatial distribution of the content comprises one or more images of the at least one content view of the content.

6. The method as claimed in claim 5, wherein one image of the content view represents a left view of the content, wherein another image of the content represents a right view of the content.

7. The method as claimed in any of the preceding claims, wherein the spatial configuration comprises one of a spatial relationship, a location, and an orientation, the spatial relationship representing one or more views of the content, the location representing position of the at least one client device of the user, and the orientation representing direction of the at least one client device.

8. The method as claimed in any of the preceding claims, further comprising:
receiving, by a content view distribution server, a content view interest request from the at least one client device of the user to establish an integrated content view distribution session on the selection of the spatial configuration by the user.

9. The method as claimed in claim 8, wherein the content view interest request comprises a session initiation protocol session initiation protocol INVITE request message, a body of the session initiation protocol INVITE request message comprising the spatial configuration selected by the user and a content view distribution feature tag, the content view distribution feature tag indicating establishment of the integrated content view distribution session to view the at least one content view of the content in the at least one client device.

10. The method as claimed in claim 8 or claim 9, wherein providing the at least one content view comprises:
mapping, by the content view distribution server, the spatial configuration selected by the user with the at least one client device; and
establishing, by the content view distribution server, the integrated content view distribution session with the at least one client device of the user.

11. The method as claimed in any of claims 8 to 10, further comprising:
updating, by the content view distribution server, the at least one content view in the real time based on an update content view request received from the user during the integrated content view distribution session.

12. A content view distribution server for providing spatial distribution of content to a user in real time, the content view distribution server comprising:
a processor; and
a memory, communicatively coupled to the processor, wherein the memory stores processor-executable instructions, which, on execution, causes the processor to perform the method of any of the preceding claims.

13. A computer-readable medium storing instructions for providing spatial distribution of content to a user in real time, wherein upon execution of the instructions by one or more processors, the one or more processors perform the method as claimed in any of claims 1 to 11.
